# EUROPÄISCHE PATENTSCHRIFT

(11) **EP 3 645 394 B1**
(45) Veröffentlichungstag und Bekanntmachung des Hinweises auf die Patenterteilung: **24.07.2024**
(21) Anmeldenummer: 18735234.9
(22) Anmeldetag: 22.06.2018
(51) Int. Cl.: B64D 11/04, B64D 11/00, F25D 23/02

(54) **WANDELBARE BORDKÜCHE IN FLUGZEUGEN**
VARIABLE ON-BOARD GALLEY IN AIRCRAFT
CUISINE EMBARQUÉE CONVERTIBLE DANS DES AVIONS

(30) Priorität: 30.06.2017 US 201762527283 P
(43) Veröffentlichungstag der Anmeldung: 06.05.2020
(73) Patentinhaber: Safran Cabin Germany GmbH, 35745 Herborn (DE)
(72) Erfinder: HAUSNER, Dennis, 35708 Haiger (DE); KLASSEN, Samuel, 35708 Haiger (DE); CHRISTIAN, Nathalie, 35641 Schöffengrund (DE)
(74) Vertreter: Neugebauer, Jürgen
(86) Internationale Anmeldenummer: PCT/EP2018/066795
(87) Internationale Veröffentlichungsnummer: WO 2019/002138

(56) Entgegenhaltungen:
- EP-A1- 2 774 840
- EP-A2- 2 808 255
- DE-A1- 102012 112 310
- US-A- 3 908 749
- US-A- 4 588 237
- US-A1- 2001 050 519
- US-A1- 2008 116 773
- US-A1- 2009 065 641
- US-A1- 2013 187 000
- US-A1- 2013 240 669
- US-A1- 2014 238 064
- US-B1- 6 761 332
- US-B2- 8 931 857

## Beschreibung

### Technisches Gebiet

Die Erfindung betrifft eine Bordeinrichtung für ein Verkehrsmittel, vorzugsweise eine Bordküche oder Bar für ein Flugzeug, die zumindest eine sichtbare Seitenwand und zumindest eine Verblendung zur teilweisen oder vollständigen Verdeckung eines Arbeitsbereichs der Bordeinrichtung aufweist.

### Hintergrund der Erfindung

US2001/0050519A1 betrifft eine Bordkücheneinheit für ein Flugzeug mit einem Versorgungsmechanismus, der an mindestens einer Wandfläche eines Kastenkörpers vorgesehen ist und einem Abdeckkörper, dessen Außenwandoberflächen mindestens aus einem speziellen feuerfesten Material bestehen.

US2008/0116773A1 betrifft eine Vorrichtung zur Aufnahme von Gegenständen umfassend mindestens ein Panel mit mindestens einer Außenkante, die mit einem Rand versehen ist, um eine stoßdämpfende Kante zu bilden.

USS6761332B1 begrifft ein Bordküchensystem mit einer ersten Struktur, einer zweiten Struktur und einem Gang für die Besatzung zwischen der ersten Struktur und der zweiten Struktur. Das Bordküchensystem umfasst zusätzlich einen Satz von Türen, die mit der ersten Struktur und der zweiten Struktur verbunden sind, um den Gang für die Besatzung vor den Blicken der einsteigenden Passagiere zu verbergen, wenn sich die Türen in einer geschlossenen Position befinden.

Die Anforderungen an das Design und die Funktion von Bordküchen in Flugzeugen sind vielseitig. So kann es gewünscht sein, den Arbeitsbereich der Bordküche während des Boarding zu verbergen, insbesondere wenn sich die Bordküche an einer Stelle im Flugzeug befindet, die von Passagieren gequert wird. Während des Fluges, wiederum, benötigt die Crew den Arbeitsbereich der Bordküche, um den Service vorzubereiten und durchzuführen. Zum Verbergen des Arbeitsbereichs kommen beispielsweise Rollos zum Einsatz.

Sichtbare Seitenwände der Bordküche können für verschiedene Funktionen genutzt werden, etwa zur Begrüßung oder Information der Passagiere durch elektronische oder gedruckte Anzeigen, Grafiken, Zeichen, Logos oder Symbole. Die Seitenwände können Taschen oder Regale zur Bereitstellung von Zeitschriften, Getränken usw. aufweisen. Allerdings ist die Nutzung einer solchen Seitenwand eingeschränkt, da sie stationär und nicht wandelbar ist. Üblicherweise ist die Seitenwand ohne Funktion, oder es wird genau eine der oben genannten Funktionen realisiert.

Es kommt hinzu, dass das Rollo zum Verbergen des Arbeitsbereichs der Bordküche ebenfalls nur für eine Funktion ausgelegt ist. Beim Ein- und Aussteigen kann das Rollo heruntergefahren werden, es muss aber während des Fluges aufgewickelt werden, so dass es in diesem Fall, etwa während des Services, keine Funktion erfüllt.

### Darstellung der Erfindung

Eine Aufgabe der Erfindung besteht darin, eine verbesserte Bordeinrichtung für ein Verkehrsmittel, vorzugsweise eine Bordküche oder Bar für ein Flugzeug, bereitzustellen, insbesondere die Funktionalität einer solchen Bordeinrichtung zu verbessern.

Gelöst wird die Aufgabe mit einer Bordeinrichtung mit den Merkmalen des Anspruchs 1. Vorteilhafte Weiterbildungen folgen aus den Unteransprüchen, der folgenden Darstellung der Erfindung sowie der Beschreibung bevorzugter Ausführungsbeispiele.

Die erfindungsgemäße Bordeinrichtung kommt in Verkehrsmitteln, beispielsweise Flugzeugen, Bussen oder Schiffen, zum Einsatz. Sie ist besonders dann nützlich, wenn wenig Platz zur Verfügung steht. Vorzugsweise ist die Bordeinrichtung eine Bordküche oder eine Bar für ein Flugzeug, denn das synergetische Kombinieren mehrerer Funktionen durch ein einziges technisches Mittel ist gerade im Luftverkehr enorm nützlich, um den begrenzten Platz effektiv zu nutzen und Gewicht einzusparen.

Die Bordeinrichtung weist hierfür zumindest eine sichtbare Seitenwand und zumindest eine Verblendung zur teilweisen oder vollständigen Verdeckung eines Arbeitsbereichs der Bordeinrichtung auf. Als Seitenwand kommt die Außenwand oder ein Abschnitt der Außenwand eines Gehäuses oder einer äußeren Verkleidung der Bordeinrichtung in Betracht. Die Bezeichnung "Seitenwand" bezieht sich nicht auf eine spezielle Seite der Bordeinrichtung, wenngleich besonders bevorzugt ein Abschnitt der Bordeinrichtung umfasst ist, der von außen sichtbar ist, beispielsweise einer Flugzeugtür zugewandt ist und so beim Boarding von den Passagieren wahrnehmbar ist. Die Verblendung ist eingerichtet, um den Arbeitsbereich zu verdecken, welcher der Crew beispielsweise zur Vorbereitung oder Durchführung eines Services dient und zu diesem Zweck etwa technische Geräte (Ofen, Mikrowelle, Kühlschrank usw.), Arbeitsflächen, Ablagen und dergleichen aufweisen kann. Ist der Arbeitsbereich durch die Verblendung verdeckt oder versteckt, zählt die Verblendung in dieser Konfiguration begrifflich nicht zur "Seitenwand".

Erfindungsgemäß ist die Verblendung zwischen zumindest zwei Konfigurationen verstellbar, wobei die Verblendung in einer ersten Konfiguration zumindest einen Teil der Seitenwand bildet oder überdeckt und in einer zweiten Konfiguration den Arbeitsbereich teilweise oder vollständig verdeckt. In anderen Worten, die Verblendung übernimmt zumindest zwei Funktionen: a) die Verdeckung des Arbeitsbereichs der Bordeinrichtung; b) eine Seitenwandfunktion.

Während die Verblendung herkömmlich bei freigelegtem Arbeitsbereich, etwa bei der Vorbereitung und Durchführung des Services, ohne Funktion ist, übernimmt sie in diesem Fall gemäß der Erfindung eine Funktion der Seitenwand. Die Seitenwand der Bordeinrichtung ist auf diese Weise wandelbar und auf zumindest zweierlei Weise nutzbar. Somit arbeiten die Seitenwand und die Verblendung synergetisch zusammen, um im Wesentlichen ohne weitere technische Mittel eine wandelbare Seitenwand zu schaffen und gleichzeitig eine Verdeckung des Arbeitsbereichs, sofern gewünscht, zu gewährleisten. Für die so erweiterte Funktionalität der Bordeinrichtung sind weder ein größerer Platzbedarf noch mehr Gewicht erforderlich.

Die Verblendung weist eine Innenseite auf, die in der ersten Konfiguration sichtbar ist und in der zweiten Konfiguration dem Arbeitsbereich zugewandt ist, so dass sie im letzteren Fall von einer Position außerhalb der Bordeinrichtung nicht sichtbar ist. Auf diese Weise kann beispielsweise ein Design, eine Beschaffenheit oder Funktionalität der Seitenwand (etwa Taschen oder Halterungen für Getränke, Zeitschriften usw.), sichtbar und zugänglich in der ersten Konfiguration, in der zweiten Konfiguration, d.h. bei der Verblendung des Arbeitsbereichs, vollständig versteckt werden.

Ein solcher Aufbau kann dadurch erreicht werden, dass die Verblendung eine drehbar gelagerte Tür ist, wobei diese vorzugsweise um etwa 270° um eine Drehachse schwenkbar gelagert ist. Die beiden Konfigurationen werden hierbei vorzugsweise an den Endpositionen der erzielbaren Schwenkamplitude gebildet. Die türartige Verblendung kann somit einen geschlossenen Zustand (zweite Konfiguration), in dem diese den Arbeitsbereich verdeckt, und einen geöffneten Zustand (erste Konfiguration), in dem diese die Seitenwand zumindest teilweise bildet, annehmen. Die Wandelbarkeit der Seitenwand und das Umkonfigurieren der Verblendung können gemäß dieser bevorzugten Ausführungsform auf technisch besonders einfache Weise realisiert werden.

Vorzugsweise weist die Bordeinrichtung zwei Verblendungen zur jeweils teilweisen Verdeckung des Arbeitsbereichs auf, wobei die beiden Verblendungen symmetrisch ausgebildet sein können. Auf diese Weise kann ein im Vergleich zur Seitenwand großer/breiter Zugang zum Arbeitsbereich gewährleistet werden. Auch der Platzbedarf, der für das Umkonfigurieren erforderlich ist, kann durch die Anwendung von zwei oder mehr Verblendungen minimiert werden.

Gemäß einem besonders bevorzugten Ausführungsbeispiel sind genau zwei Verblendungen vorgesehen, die wie zwei Flügeltüren auf symmetrische Weise aufgebaut und schwenkbar gelagert sind. Die Bordeinrichtung kann in diesem Fall eine weitere sichtbare Seitenwand aufweisen, wobei die beiden Verblendungen jeweils zwischen den beiden oben definierten Konfigurationen verstellbar sind.

Die Schwenkbarkeit der Verblendung(en) wird vorzugsweise um jeweils eine Drehachse realisiert. Allerdings können die Verblendung(en) entlang anderer und/oder weiterer Freiheitsgrade verstellbar eingerichtet sein. So können die Verblendung(en) um weitere Drehpunkte und/oder Drehachsen verschwenkbar sein und/oder verschiebbar gelagert sein. Ferner kann die Bordeinrichtung mit technischen Mitteln (Riegel, Haken/Öse, Schnappverschluss, Magnet, Schloss usw.) zum Befestigen und/oder Arretieren der Verblendung(en) in der ersten und/oder zweiten Konfiguration ausgestattet sein.

Vorzugsweise stellt die Seitenwand in der ersten und zweiten Konfiguration verschiedene Servicefunktionen bereit, wobei die Servicefunktionen beispielsweise umfassen: Anzeigen, wie etwa Grafiken, Zeichen, Logos oder Symbole; und/oder Halterungen, wie etwa Regale oder Taschen, zur Bereitstellung bzw. Präsentation von Zeitschriften, Getränken und/oder anderen Waren. Dies sind konkrete Beispiele, wie die wandelbare Seitenwand genutzt werden kann. Indem die Verblendung in der zweiten Konfiguration den Arbeitsbereich verdeckt, können die in der ersten Konfiguration durch die Verblendung dargebotenen Servicefunktionen vollständig versteckt werden.

Die Seitenwand weist eine Aussparung zur Aufnahme der Verblendung in der ersten Konfiguration auf. Dies gilt analog für den Fall mehrerer Seitenwände und/oder Verblendungen. Vorzugsweise entspricht die Abmessung der Aussparung der Abmessung der zugehörigen Verblendung. In anderen Worten, die Aussparung ist vorzugsweise so bemessen, dass die Verblendung in der ersten Konfiguration so darin aufgenommen wird, dass sich ein möglichst homogenes Bild der sichtbaren Seitenwand ergibt. Beispielsweise kann die Tiefe der Aussparung so bemessen sein, dass eine ungefähr ebene Gesamtfläche gebildet wird, d.h. dass die nach außen gerichtete Oberfläche der Verblendung und die sich daran anschließenden Oberflächenabschnitte der übrigen Seitenwand im Wesentlichen stufenlos verlaufen.

Vorzugsweise ist die bzw. eine Verblendung aus mehreren relativ zueinander verschwenkbaren und/oder verschiebbaren Teilen aufgebaut. So kann die Verblendung (analog mehrere Verblendungen) einen Hauptteil und eine Erweiterung aufweisen, wobei die Erweiterung für die erste Konfiguration so im oder am Hauptteil verstaubar ist, dass die Verblendung in die Aussparung passt. Auf diese Weise lässt sich die Gesamtfläche der Verdeckung modifizieren, insbesondere für die zweite Konfiguration vergrößern. Das Ausführungsbeispiel ist im Fall zweier symmetrischer Verblendungen insbesondere dann nützlich, wenn die Breite der Bordeinrichtung größer als die zweifache Tiefe derselben ist. Durch die Erweiterungen lassen sich die beiden Verblendungen in der zweiten Konfiguration so vergrößern, dass der Arbeitsbereich im Wesentlichen vollständig verdeckt ist. Beim Umändern in die erste Konfiguration werden die Erweiterungen im oder am Hauptteil verstaut. Dies kann dadurch erzielt werden, dass die Erweiterung in einen Spalt des zugehörigen Hauptteils eingeschoben wird. Alternativ kann die Erweiterung geführt auf der Innenfläche oder Außenfläche des Hauptteils verschiebbar eingerichtet sein, oder die Erweiterung kann relativ zum Hauptteil verschwenkbar gelagert sein.

Vorzugsweise ist die Verblendung parallel zur zugehörigen Seitenwand verschiebbar gelagert. Hierbei kann die Verblendung zusätzlich oder alternativ zu einer etwaigen Schwenkbarkeit verschiebbar vorgesehen sein. Durch Kombinieren von zwei Bordeinrichtungen, deren Arbeitsbereiche einander zugewandt sind, kann eine Konfiguration erzeugt werden, bei welcher der Bereich zwischen den beiden Bordeinrichtungen durch die Verblendungen zumindest teilweise abgetrennt ist, wodurch sich ein Raum höherer Privatsphäre beispielweise für die Crew herstellen lässt.

Vorzugsweise weist die Bordeinrichtung ein Fach auf, das von der Seitenwand und/oder vom Arbeitsbereich zugänglich ist. Das Fach kann als Kühlfach eingerichtet sein, wobei in diesem Fall die Bordeinrichtung Mittel zum Kühlen des Fachs aufweist. Vorzugsweise ist das Fach über eine oder mehrere Außentüren von der Seitenwand und/oder eine oder mehrere Innentüren vom Arbeitsbereich zugänglich. Das Fach ist auf diese Weise für die Passagiere in der zweiten Konfiguration (Bordingzustand) etwa vom Gang aus über die Außentür(en) zugänglich, wodurch auch bei einer von der Crew nicht besetzten Bordeinrichtung ein Service angeboten werden kann. Zum Befüllen und/oder Bedienen des Fachs durch die Crew ist dieses alternativ oder zusätzlich über die Innentür(en) zugänglich. Gemäß einem bevorzugten Ausführungsbeispiel ist ein Zugang zum Fach über die Innentür(en) nur im Servicezustand, d.h. bei geöffneter Abdeckung, möglich, d.h. die Innentür(en) sind in diesem Fall vorzugsweise so eingerichtet ist, dass sie nur in der ersten Konfiguration geöffnet werden können.

Die Höhe der Verblendung(en) muss nicht, kann jedoch der Höhe der Bordeinrichtung entsprechen. Sie entspricht vorzugsweise der Höhe des Arbeitsbereichs oder der Höhe der Bordeinrichtung, sie kann jedoch eine größere oder reduzierte Höhe aufweisen, je nach beabsichtigter Funktionalität und gewünschtem Design.

Wenngleich die Erfindung besonders bevorzugt bei Bordküchen oder Bars in Flugzeugen zum Einsatz kommt, kann die Erfindung auch in anderen Verkehrsmitteln, etwa Bussen oder Schiffen, sowie anderen Serviceeinrichtungen angewendet werden.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale realisiert werden, insofern sich die Merkmale nicht widersprechen. Die folgende Beschreibung bevorzugter Ausführungsbeispiele erfolgt mit Bezug auf die begleitenden Zeichnungen.

### Kurze Beschreibung der Figuren

Die Figuren 1a, 1b und 1c zeigen schematisch den Grundaufbau einer Bordeinrichtung gemäß einer Ausführungsform, wobei unterschiedliche Konfigurationen jeweils als Querschnittsansicht dargestellt sind.
Die Figuren 2a und 2b sind dreidimensionale schematische Ansichten, die eine beispielhafte funktionale Ausgestaltung zweier Konfigurationen der Bordeinrichtung zeigen.
Die Figuren 3a bis 3e sind dreidimensionale schematische Ansichten, die beispielhafte funktionale Ausgestaltungen in verschiedenen Konfigurationen der Bordeinrichtung zeigen.
Die Figuren 4a, 4b und 4c zeigen schematisch den Grundaufbau einer Bordeinrichtung gemäß einer weiteren Ausführungsform.
Die Figuren 5a und 5b sind dreidimensionale schematische Ansichten einer Bordeinrichtung gemäß einer weiteren Ausführungsform.
Die Figuren 6a bis 6c sind dreidimensionale schematische Ansichten, die beispielhafte funktionale Ausgestaltungen einer Konfiguration (des Bordingzustands) der Bordeinrichtung zeigen.
Die Figuren 7a und 7b sind schematische Querschnittsansichten einer Bordeinrichtung mit Fach gemäß der Ausführungsform der Figur 6c.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholende Beschreibung dieser Elemente wird teilweise verzichtet, um Redundanzen zu vermeiden.

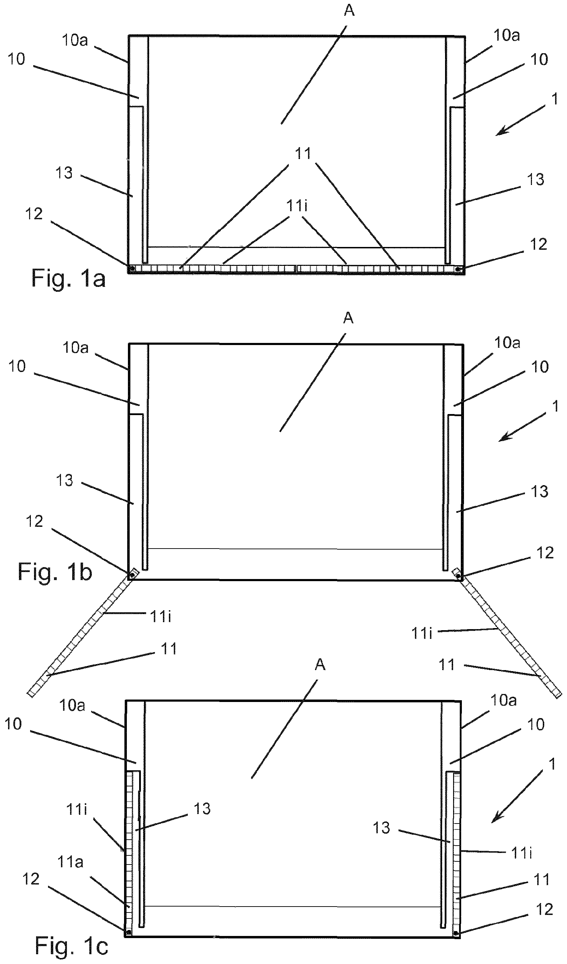

Die Figuren 1a, 1b und 1c zeigen schematisch den Grundaufbau einer Bordeinrichtung 1 gemäß einer Ausführungsform. Die Bordeinrichtung 1 ist vorzugsweise eine Bordküche in einem Flugzeug, sie kann jedoch auch eine andere Einrichtung, insbesondere Serviceeinrichtung, sein, beispielsweise eine Bar. Hierbei zeigen die Figuren 1a, 1b und 1c jeweils als Querschnittsansicht unterschiedliche Konfigurationen, wodurch verschiedene Anwendungs- oder Benutzungszustände realisierbar sind.

Die Bordeinrichtung 1 weist gemäß dem vorliegenden Ausführungsbeispiel zwei sichtbare Seitenwände 10 und zwei symmetrisch aufgebaute und drehbar gelagerte Verblendungen 11 auf. Die Verblendungen 11 sind um eine Drehachse 12 drehbar gelagert, wodurch sie wie Flügeltüren geöffnet und geschlossen werden können, wie es aus einem Vergleich der Figuren 1a und 1b hervorgeht.

Die Konfiguration der Figur 1a sei als "Boardingzustand" oder "zweite Konfiguration" bezeichnet. Im Boardingzustand ist die Außenseite 10a der Seitenwand 10 sichtbar und kann eine gewünschte Servicefunktion, beispielsweise Anzeige von Informationen, Begrüßung, Halterung von Zeitschriften oder Getränken usw., erfüllen. Die Verblendungen 11 verdecken gleichzeitig einen Arbeitsbereich A der Bordingeinrichtung 1, welcher der Crew beispielsweise zur Vorbereitung und/oder Durchführung eines Services dient und zu diesem Zweck technische Geräte (Ofen, Mikrowelle, Kühlschrank usw.), Arbeitsflächen, Ablagen und dergleichen aufweisen kann. Die erste Konfiguration kann beim Ein- und Aussteigen der Passagiere angewendet werden, sie kann aber beispielsweise auch als besondere Konfiguration genutzt werden, etwa eine Selbstbedienung erlauben, wenn die Bordeinrichtung 1 nicht besetzt ist.

Die Drehlagerungen der Verblendungen 11 sind so eingerichtet, dass die Verblendungen 11 jeweils um 270° drehbar sind. Auf diese Weise ist eine Konfiguration realisierbar, dargestellt in der Figur 1c, bei der die Verblendungen 11 jeweils parallel zur zugehörigen Seitenwand 10 verlaufen und in diesem Sinne einen Teil derselben bilden. Diese Konfiguration sei als "Servicezustand" oder "erste Konfiguration" bezeichnet.

Wenngleich in der vorliegenden Ausführungsform die Verblendungen 11 jeweils um (genau) eine Achse 12 schwenkbar gelagert sind, können diese auch jeweils um mehrere Achsen schwenkbar und/oder translatorisch gelagert sein.

Im Servicezustand wird die Seitenwand 10 - genauer gesagt, deren sichtbare Seite - vollständig oder zumindest teilweise von der Innenseite 11i der Verblendung 11 gebildet. Zu diesem Zweck können die Seitenwände 10 Aussparungen 13 aufweisen, welche die Verblendungen 11 im Servicezustand aufnehmen, so dass diese mit den übrigen Seitenwandabschnitten gemeinsam eine ungefähr ebene Oberfläche bilden. Allerdings besteht diesbezüglich keine Beschränkung, da die konkrete Ausgestaltung des Servicezustands (ebenfalls des Bordingzustands) von der gewünschten, zu erzielenden Funktionalität abhängt. Wichtig ist, dass die Verblendungen 11 durch ihre Schwenkbarkeit um 270° zwei Funktionen übernehmen: a) die Verdeckung des Arbeitsbereichs A im Boardingzustand; b) eine Seitenwandfunktion im Servicezustand. Somit sind die Seitenwände 10 auf zweierlei Weise nutzbar.

Wenngleich in den Figuren 1a bis 1c zwei Verblendungen 11 gezeigt sind, die auf symmetrische Weise angeordnet und schwenkbar sind, sowie jeweils mit der zugehörigen Seitenwand 10 synergetisch zusammenwirken, besteht diesbezüglich keine Beschränkung. Beispielsweise ist eine nicht-symmetrische Anordnung ebenso realisierbar, wie eine Ausführungsvariante mit genau einer Verblendung 11. Ebenfalls müssen nicht beide Seitenwände 10 eine Servicefunktion (Anzeige, Halterung von Zeitschriften, Getränken usw.) aufweisen. Beispielsweise ist es möglich, dass eine der beiden Seitenwände 10 von außen nicht einsehbar ist, etwa wenn zwei Bordeinrichtungen 1 nebeneinander angeordnet sind. In diesem Fall kann die zugehörige Verblendung 11 auf andere Weise aufgebaut sein, etwa verschiebbar und/oder schwenkbar um 90° bis 180°.

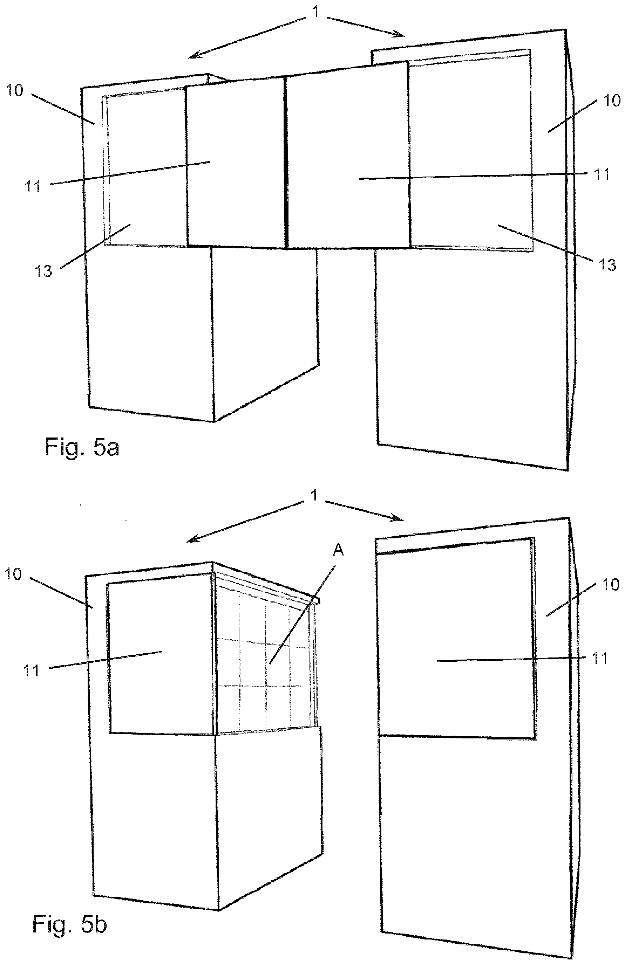

Die Schwenkbarkeit der Verblendungen 11 wird im vorliegenden Beispiel um jeweils eine Drehachse 12 realisiert. Allerdings können die Verblendungen 11 entlang anderer und/oder weiterer Freiheitsgrade verstellbar eingerichtet sein. So können die Verblendungen 11 um weitere Drehpunkte und/oder Drehachsen verschwenkbar sein und/oder verschiebbar gelagert sein (vgl. Ausführungsbeispiel der Figuren 5a und 5b).

Ferner kann die Bordeinrichtung mit technischen Mitteln (Riegel, Haken/Öse, Schnappverschluss, Magnet, Schloss usw.) zum Befestigen und/oder Arretieren der Verblendungen 11 im Boardingzustand und/oder Servicezustand ausgestattet sein, insbesondere um die Verblendungen 11 während des Starts, der Landung oder Turbulenzen in der Luft zu sichern.

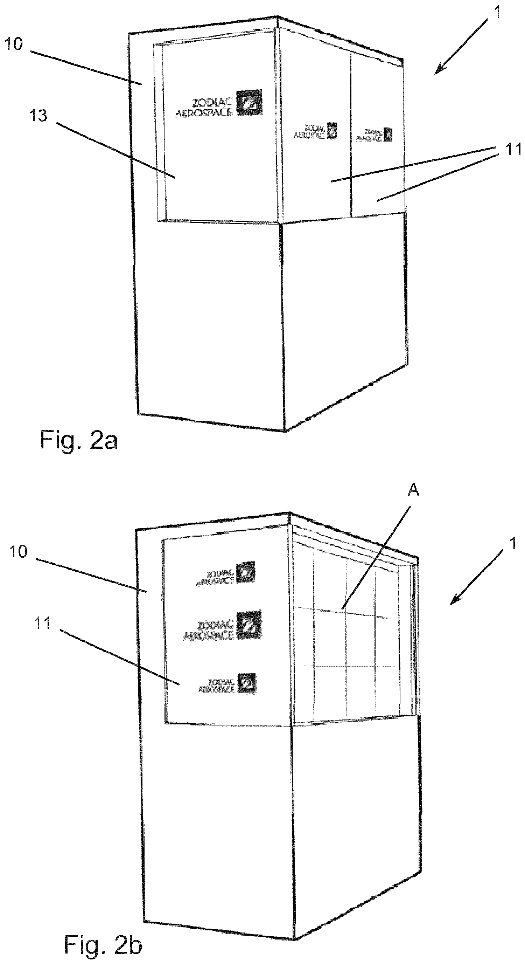

Die Figuren 2a und 2b sind dreidimensionale schematische Ansichten, die eine beispielhafte funktionale Ausgestaltung des Bordingzustands und des Servicezustands der Bordeinrichtung 1 zeigen. In dem dargestellten Fall unterscheiden sich die beiden Konfigurationen durch das Design der sichtbaren Seitenwand 10. Konkret werden unterschiedliche Logos dargestellt.

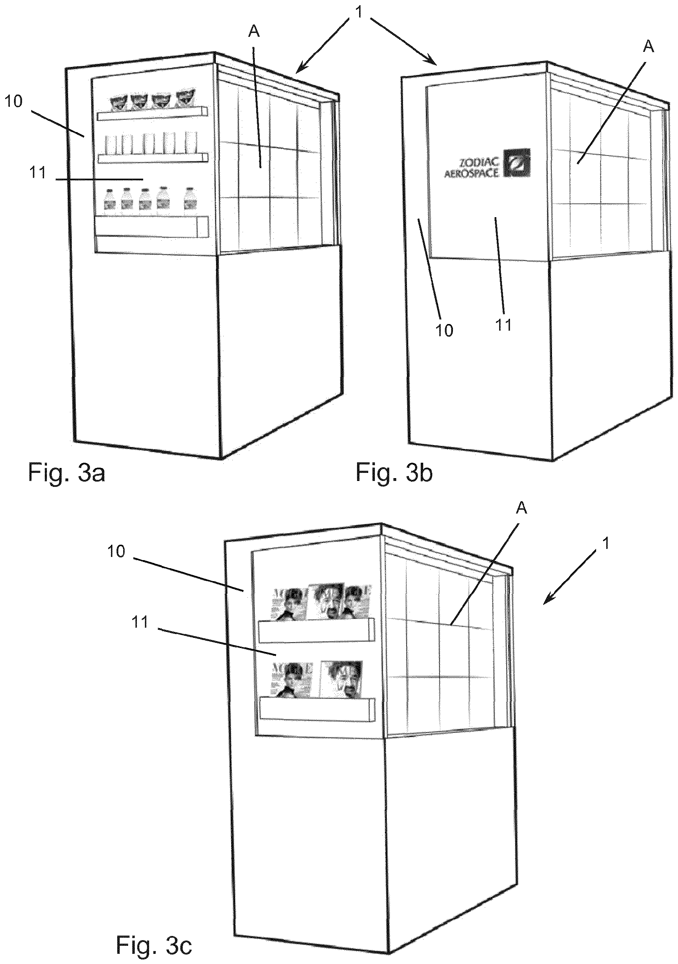

Die Figuren 3a, 3b und 3c sind dreidimensionale schematische Ansichten, die verschiedene funktionale Ausgestaltungen des Servicezustands der Bordeinrichtung 1 zeigen. So können die Innenseiten 11i der Verblendungen 11, die im Servicezustand die Seitenwand 10 zumindest teilweise bilden, mit Ablagen (Taschen, Regalen, Fächern usw.) für Zeitschriften (vgl. Figur 3c), Getränke oder andere Waren (vgl. Figur 3a) ausgestattet sein.

Aus den Figuren 2a, 2b und 3a bis 3c geht hervor, dass die Höhe der türartigen Verblendungen 11 nicht der Höhe der Bordeinrichtung 1 entsprechen muss. Vielmehr kann sie der Höhe des Arbeitsbereichs A entsprechen, eine größere oder reduzierte Höhe aufweisen, je nach beabsichtigter Funktionalität und gewünschtem Design. Ebenfalls sind die Abmessungen der Aussparungen 13 variabel, oder sie können ggf. weggelassen werden. Vorzugsweise entsprechen sowohl die Tiefe als auch die Länge der Aussparungen 13 den darin aufzunehmenden Verblendungen 11.

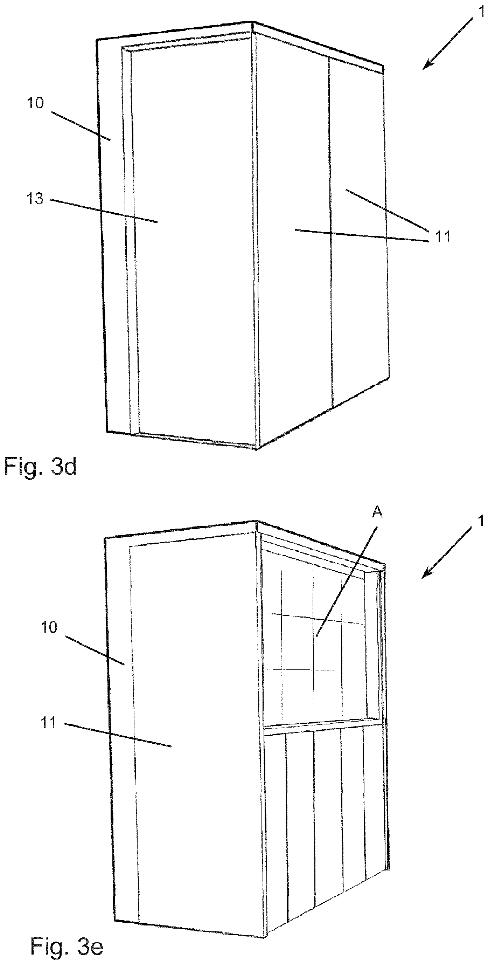

Die Figuren 3d und 3e zeigen ein Ausführungsbeispiel, bei dem die Verblendung 11 die gesamte oder im Wesentlichen gesamte Höhe der Bordeinrichtung 1 überspannt.

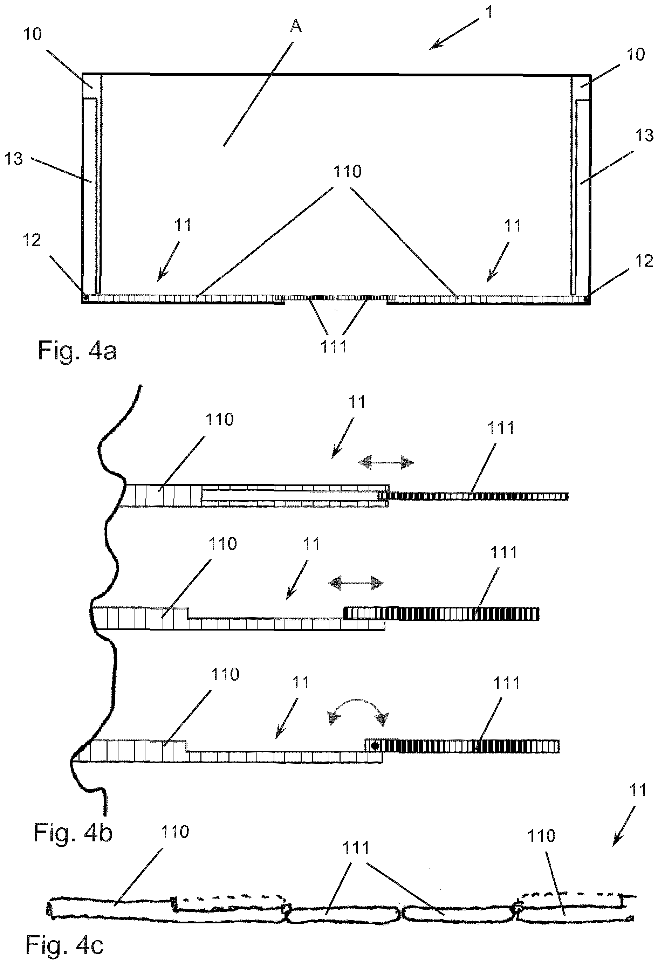

Die Figuren 4a, 4b und 4c zeigen schematisch den Grundaufbau einer Bordeinrichtung 1 gemäß einer weiteren Ausführungsform. Die darin dargestellte Ausführungsform unterscheidet sich von den obigen Ausführungsbeispielen darin, dass die Verblendungen 11 jeweils mehrteilig aufgebaut sind. Im vorliegenden Ausführungsbeispiel weisen die Verblendungen 11 je einen Hauptteil 110 und eine relativ dazu verschwenkbare und/oder verschiebbare Erweiterung 111 auf. Eine solche mehrteilige Ausgestaltung ist im Fall zweier symmetrischer Verblendungen 11 insbesondere dann nützlich, wenn die Breite der Bordeinrichtung 1 größer als die zweifache Tiefe derselben ist. Durch die Erweiterungen 111 lassen sich die Verblendungen 11 im Boardingzustand vergrößern, so dass der Arbeitsbereich A im Wesentlichen vollständig verdeckt ist.

Beim Umändern in die erste Konfiguration wird die Erweiterung 111 im oder am Hauptteil 110 verstaut. Dies kann dadurch erzielt werden, dass die Erweiterung 111 in einen Spalt des zugehörigen Hauptteils 110 eingeschoben wird, vgl. obere Variante der Figur 4b. Alternativ kann die Erweiterung 111 geführt auf der Innenfläche oder Außenfläche des Hauptteils 110 verschiebbar eingerichtet sein, vgl. mittlere Variante der Figur 4b, oder die Erweiterung 111 kann relativ zum Hauptteil 110 verschwenkbar gelagert sein, vgl. untere Variante der Figur 4b und Figur 4c. In der Variante der Figur 4c wird im ausgeklappten Zustand der Erweiterung(en) 111 eine im Wesentlichen ebene sichtbare Außenfläche der Verblendung(en) 11 erzielt.

Die Figuren 5a und 5b sind dreidimensionale schematische Ansichten einer Bordeinrichtung 1 gemäß einer weiteren Ausführungsform. Hierbei sind die Verblendungen 11 zusätzlich oder alternativ zur Schwenkbarkeit parallel zu den zugehörigen Seitenwänden 10 verschiebbar eingerichtet. Die Verblendung des Arbeitsbereichs A erfolgt indirekt, wie in der Figur 5a gezeigt. Durch Kombinieren von zwei Bordeinrichtungen 1, deren Arbeitsbereiche A einander zugewandt sind, kann eine Konfiguration gemäß der Figur 5a erzeugt werden, bei welcher der Bereich zwischen den beiden Bordeinrichtungen 1 zumindest teilweise abgetrennt ist, wodurch sich ein Raum höherer Privatsphäre beispielweise für die Crew herstellen lässt.

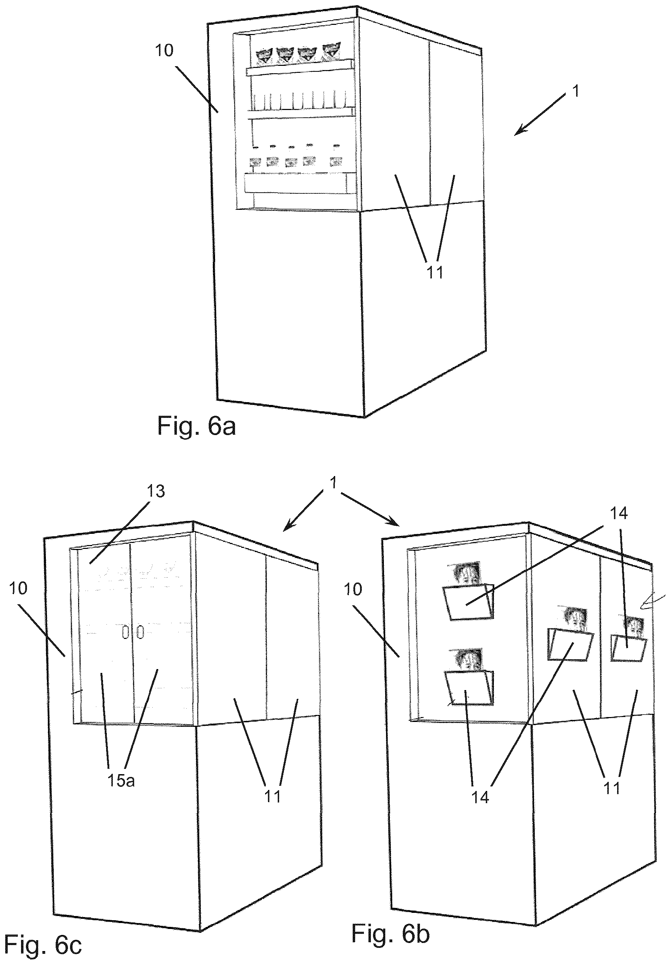

Die Figuren 6a bis 6c sind dreidimensionale schematische Ansichten, die weitere funktionale Ausgestaltungen der zweiten Konfiguration der Bordeinrichtung 1 zeigen. Der Arbeitsbereich A ist durch die Verblendungen 11 verschlossen, wodurch auch bei einer von der Crew nicht besetzten Bordeinrichtung ein Service angeboten werden kann.

Beispielsweise kann in der Aussparung 13 der Seitenwand 10 ein Barbereich mit Ablagen für Getränke und Gläser zugänglich sein, wie in der Figur 6a gezeigt. Der Barbereich wird im Servicezustand durch die entsprechende Verblendung 11 verdeckt oder geschlossen, wodurch die Funktionalität im Vergleich zur Variante der Figur 3a gewissermaßen umgekehrt ist. Die Figur 6b zeigt ein Ausführungsbeispiel, bei dem in der Aussparung 13 der Seitenwand 10 Taschen 14, etwa zur Ablage von Zeitschriften, vorgesehen sind. Alternativ oder zusätzlich können die Außenseiten der Verblendungen 11 ebenfalls mit Taschen 14 ausgestattet sein. Die Taschen 14 sind vorzugsweise flexibel, beispielsweise faltbar oder aus einem Stoff gefertigt, wodurch diese im Servicezustand, verdeckt durch die Verblendungen 11 kaum Stauraum benötigen.

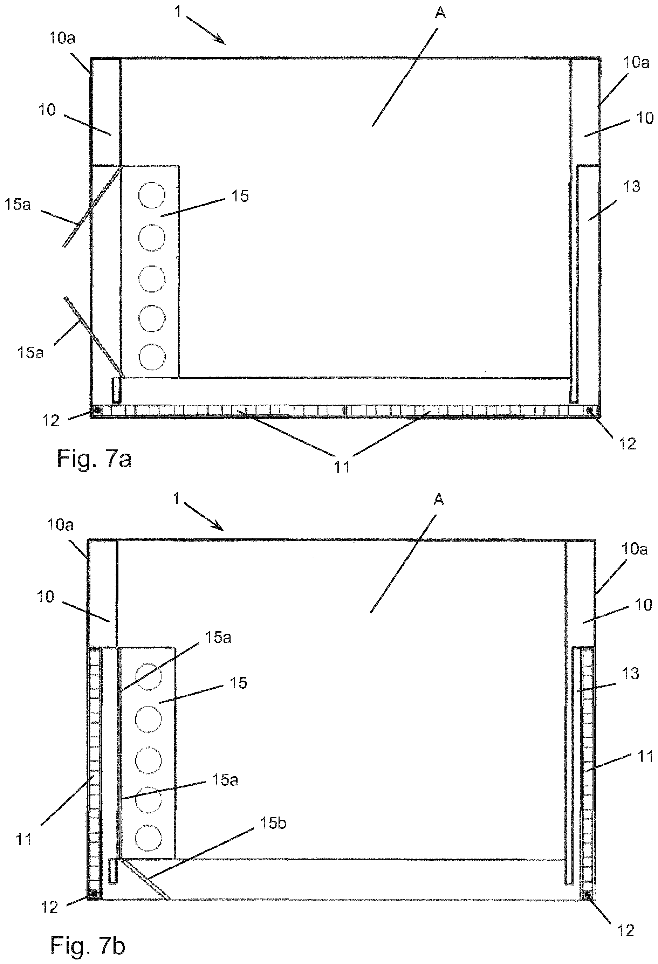

Die Figuren 6c, 7a und 7b zeigen eine Ausführungsform, bei der in der Aussparung 13 einer Seitenwand 10 ein Fach 15, vorzugsweise als Kühlfach ausgebildet, vorgesehen ist. Das Fach 15 ist durch eine oder mehrere Außentüren 15a (Figur 7a) und/oder eine oder mehrere Innentüren 15b (Figur 7b) verschließbar und zu öffnen. Das Fach 15 ist für die Passagiere in der zweiten Konfiguration (Bordingzustand) beispielsweise vom Gang aus über die Außentür(en) 15a zugänglich, wie es in der Schnittansicht der Figur 7a gezeigt ist. Zum Befüllen und/oder Bedienen des Fachs 15 durch die Crew ist dieses alternativ oder zusätzlich über die Innentür(en) 15b zugänglich, wie es in der Schnittansicht der Figur 7b gezeigt ist. Gemäß dem bevorzugten Ausführungsbeispiel der Figur 7b ist ein Zugang zum Fach 15 über die Innentür(en) 15b nur im Servicezustand, d.h. bei geöffneter Abdeckung 11, möglich.

Soweit anwendbar können alle Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Bordeinrichtung
- 10: Seitenwand
- 10a: Außenseite der Seitenwand
- 11: Verblendung
- 11i: Innenseite der Verblendung
- 12: Drehachse
- 13: Aussparung
- 14: Tasche
- 15: Fach/Kühlfach
- 15a: Außentür
- 15b: Innentür
- 110: Hauptteil der Verblendung
- 111: Erweiterung

- A: Arbeitsbereich

## Patentansprüche

1. Bordeinrichtung (1) für ein Verkehrsmittel, vorzugsweise Bordküche oder
Bar für ein Flugzeug, die zumindest eine sichtbare Seitenwand (10) und zumindest eine Verblendung (11) zur teilweisen oder vollständigen Verdeckung eines Arbeitsbereichs (A) der Bordeinrichtung (1) aufweist,
wobei
die Verblendung (11) zwischen zumindest zwei Konfigurationen verstellbar ist, wobei die Verblendung (11) in einer ersten Konfiguration zumindest einen Teil der Seitenwand (10) bildet oder überdeckt und in einer zweiten Konfiguration den Arbeitsbereich (A) teilweise oder vollständig verdeckt,
wobei die Verblendung (11) eine Innenseite (11i) aufweist, die in der ersten Konfiguration sichtbar ist und in der zweiten Konfiguration dem Arbeitsbereich (A) zugewandt ist, so dass sie von einer Position außerhalb der Bordeinrichtung nicht sichtbar ist,
**dadurch gekennzeichnet, dass**
die Seitenwand (10) eine Aussparung (13) zur Aufnahme
der Verblendung (11) in der ersten Konfiguration aufweist, wobei die Abmessung der Aussparung (13) vorzugsweise der Abmessung der zugehörigen Verblendung (11) entspricht.

2. Bordeinrichtung (1) nach Anspruch 1, **dadurch gekennzeichnet, dass** die Verblendung (11) eine drehbar gelagerte Tür ist, wobei diese vorzugsweise um etwa 270° um eine Drehachse schwenkbar gelagert ist.

3. Bordeinrichtung (1) nach Anspruch 2, **dadurch gekennzeichnet, dass** diese zwei Verblendungen (11) zur jeweils teilweisen Verdeckung des Arbeitsbereichs (A) aufweist, wobei die beiden Verblendungen (11) vorzugsweise symmetrisch ausgebildet sind.

4. Bordeinrichtung (1) nach Anspruch 3, **dadurch gekennzeichnet, dass** diese eine weitere Seitenwand (10) aufweist und beide Verblendungen (11) zwischen zumindest zwei Konfigurationen verstellbar sind, wobei die beiden Verblendungen (11) in einer ersten Konfiguration einen Teil der einen und der anderen Seitenwand (10) bilden und in einer zweiten Konfiguration den Arbeitsbereich (A) teilweise oder vollständig verdecken.

5. Bordeinrichtung (1) nach einem der vorigen Ansprüche, **dadurch gekennzeichnet, dass** die Seitenwand (10) in der ersten und zweiten Konfiguration verschiedene Servicefunktionen bereitstellt, wobei die Servicefunktionen vorzugsweise umfassen: Anzeigen, wie etwa Grafiken, Zeichen, Logos oder Symbole; und/oder Halterungen, wie etwa Regale oder Taschen (14), zur Bereitstellung von Zeitschriften, Getränken und/oder anderen Waren.

6. Bordeinrichtung (1) nach einem der vorigen Ansprüche, **dadurch gekennzeichnet, dass** die Verblendung (11) aus mehreren relativ zueinander verschwenkbaren und/oder verschiebbaren Teilen aufgebaut ist.

7. Bordeinrichtung (1) nach einem der vorigen Ansprüche, **dadurch gekennzeichnet, dass** die Verblendung (11) einen Hauptteil (110) und eine Erweiterung (111) aufweist, wobei die Erweiterung (111) so im oder am Hauptteil (110) verstaubar ist, dass die Verblendung (11) in der ersten Konfiguration in die Aussparung (13) passt.

8. Bordeinrichtung (1) nach Anspruch 7, **dadurch gekennzeichnet, dass** die Erweiterung (111) in einen Spalt des Hauptteils (110) einschiebbar ist oder geführt auf einer Oberfläche des Hauptteils (110) verschiebbar ist oder relativ zum Hauptteil (110) verschwenkbar ist.

9. Bordeinrichtung (1) nach einem der vorigen Ansprüche, **dadurch gekennzeichnet, dass** die Verblendung (11) parallel zur zugehörigen Seitenwand (10) verschiebbar gelagert ist.

10. Bordeinrichtung (1) nach einem der vorigen Ansprüche, **dadurch gekennzeichnet, dass** diese ein Fach (15) aufweist, das von der Seitenwand (10) und/oder vom Arbeitsbereich (A) zugänglich ist.

11. Bordeinrichtung (1) nach Anspruch 10, **dadurch gekennzeichnet, dass** das Fach (15) kühlbar ist.

12. Bordeinrichtung (1) nach Anspruch 10 oder 11, **dadurch gekennzeichnet, dass** das Fach über eine oder mehrere Außentüren (15a) von der Seitenwand (10) und/oder eine oder mehrere Innentüren (156) vom Arbeitsbereich (A) zugänglich ist, wobei die Innentür (15b) vorzugsweise so eingerichtet ist, dass diese nur in der ersten Konfiguration geöffnet werden kann.

13. Bordeinrichtung (1) nach einem der vorigen Ansprüche, **dadurch gekennzeichnet, dass** die Höhe der Verblendung (11) im Wesentlichen gleich der Höhe der Bordeinrichtung (1) ist.

## Claims

1. On-board facility (1) for a means of transport, preferably a galley or a bar for an aircraft, which has at least one visible side wall (10), and at least one panel (11) for partial or complete concealment of a working area (A) of the on-board facility (1), wherein
the panel (11) can be adjusted between at least two configurations, wherein in a first configuration the panel (11) forms or covers at least a part of the side wall (10) and in a second configuration partially or completely covers the working area (A), wherein
the panel (11) has an inner surface (111), which in the first configuration is visible, and in the second configuration faces the working area (A), so that it is not visible from a position external to the on-board facility,
**characterised in that**,
in the first configuration the side wall (10) has a recess (13) to accommodate the panel (11), wherein the dimension of the recess (13) preferably corresponds to the dimension of the associated panel (11).

2. On-board facility (1) in accordance with Claim 1, **characterised in that**, the panel (11) is a door mounted such that it can rotate, wherein the latter is preferably mounted such that it can be pivoted about an axis of rotation through approximately 270°.

3. On-board facility (1) in accordance with Claim 2, **characterised in that**, the latter has two panels (11) for the partially covering of the working area (A) in each case, wherein the two panels (11) are preferably designed so as to be symmetrical.

4. On-board facility (1) in accordance with Claim 3, **characterised in that**, the latter has a further side wall (10), and the two panels (11) can be adjusted between at least two configurations, wherein in a first configuration the two panels (11) form a part of the one and the other side wall (10) and in a second configuration partially or completely cover the working area (A).

5. On-board facility (1) in accordance with one of the preceding claims, **characterised in that**, in the first and second configurations the side wall (10) provides various service functions, wherein the service functions preferably include: displays, such as graphics, signs, logos or symbols; and/or holders, such as shelves or pockets (14), for the provision of magazines, drinks, and/or other merchandise.

6. On-board facility (1) in accordance with one of the preceding claims, **characterised in that**, the panel (11) is made up of a plurality of parts that can be pivoted, and/or moved, relative to one another.

7. On-board facility (1) in accordance with one of the preceding claims, **characterised in that**, the panel (11) has a main part (110) and an extension (111), wherein the extension (111) can be stowed in or on the main part (110) in such a way that in the first configuration the panel (11) fits into the recess (13).

8. On-board facility (1) in accordance with Claim 7, **characterised in that**, the extension (111) can be pushed into a gap in the main part (110), or can be guided on a surface of the main part (110), or can be pivoted relative to the main part (110).

9. On-board facility (1) in accordance with one of the preceding claims, **characterised in that**, the panel (11) is mounted such that it can be moved parallel to the associated side wall (10).

10. On-board facility (1) in accordance with one of the preceding claims, **characterised in that**, the latter has a compartment (15), which can be accessed from the side wall (10), and/or from the working area (A).

11. On-board facility (1) in accordance with Claim 10, **characterised in that**, the compartment (15) can be cooled.

12. On-board facility (1) in accordance with Claim 10 or 11, **characterised in that**, the compartment can be accessed by way of one or a plurality of outer doors (15a) from the side wall (10), and/or can be accessed by way of one or more inner doors (156) from the working area (A), wherein the inner door (15b) is preferably fitted such that it can only be opened in the first configuration.

13. On-board facility (1) in accordance with one of the preceding claims, **characterised in that**, the height of the panel (11) is essentially the same as the height of the on-board facility (1).

## Revendications

1. Installation embarquée (1) pour un moyen de transport, de préférence une cuisine embarquée ou un bar pour un avion, qui présente au moins une paroi latérale (10) visible et au moins un placage (11) pour recouvrir partiellement ou complètement un espace de travail (A) de l'installation embarquée (1),
dans laquelle
le placage (11) est réglable entre au moins deux configurations, dans laquelle le placage (11) forme ou recouvre au moins une partie de la paroi latérale (10) dans une première configuration et couvre partiellement ou complètement l'espace de travail (A) dans une deuxième configuration,
dans laquelle le placage (11) présente une face intérieure (11i) qui est visible dans la première configuration et est tournée vers l'espace de travail (A) dans la deuxième configuration, de sorte qu'elle n'est pas visible d'une position hors de l'installation embarquée,
**caractérisée en ce que**
la paroi latérale (10) présente un évidement (13) pour recevoir le placage (11) dans la première configuration, dans laquelle les dimensions de l'évidement (13) correspondent de préférence aux dimensions du placage (11) correspondant.

2. Installation embarquée (1) selon la revendication 1, **caractérisée en ce que** le placage (11) est une porte positionnée rotative, dans laquelle celle est disposée pivotante de préférence de 270° sur un pivot.

3. Installation embarquée (1) selon la revendication 2, **caractérisée en ce que** celle-ci présente deux placages (11) pour couvrir respectivement au moins partiellement l'espace de travail (A), dans laquelle les deux placages (11) sont formés de préférence symétriques.

4. Installation embarquée (1) selon la revendication 3, **caractérisée en ce que** celle-ci présente une autre paroi latérale (10) et les deux placages (11) sont réglables entre au moins deux configurations, dans lequel les deux placages (11) forment une partie de l'une et de l'autre paroi latérale (10) dans une première configuration et couvrent partiellement ou complètement l'espace de travail (A) dans une deuxième configuration.

5. Installation embarquée (1) selon l'une des revendications précédentes, **caractérisée en ce que** la paroi latérale (10) offre différentes fonctions de service dans la première et la deuxième configuration, dans laquelle les fonctions de service comprennent de préférence : des affiches comme des graphiques, des signes, des logos ou des symboles ; et/ou des supports comme des étagères ou des poches (14) pour fournir des magazines, des boissons et/ou d'autres marchandises.

6. Installation embarquée (1) selon l'une des revendications précédentes, **caractérisée en ce que** le placage (11) est composé de plusieurs parties pivotantes et/ou mobiles l'une par rapport à l'autre.

7. Installation embarquée (1) selon l'une des revendications précédentes, **caractérisée en ce que** le placage (11) présente une partie principale (110) et une extension (111), dans lequel l'extension (111) peut être ainsi logée dans ou sur la partie principale (110) que le placage (11) passe dans l'évidement (13) dans la première configuration.

8. Installation embarquée (1) selon la revendication 7, **caractérisée en ce que** l'extension (111) peut être introduite dans une fente de la partie principale (110) ou peut être poussée sur une surface de la partie principale (110) ou pivotante par rapport à la partie principale (110).

9. Installation embarquée (1) selon l'une des revendications précédentes, **caractérisée en ce que** le placage (11) est disposé mobile parallèlement à la paroi latérale correspondante (10).

10. Installation embarquée (1) selon l'une des revendications précédentes, **caractérisée en ce que** celle-ci présente un compartiment (15) qui est accessible depuis la paroi latérale (10) et/ou depuis l'espace de travail (A).

11. Installation embarquée (1) selon la revendication 10, **caractérisée** ce que le compartiment (15) peut être refroidi.

12. Installation embarquée (1) selon la revendication 10 ou 11, **caractérisée** ce que le compartiment est accessible depuis une ou plusieurs porte(s) extérieure(s) (15a) de la paroi latérale (10) et/ou une ou plusieurs porte(s) intérieure(s) (156) de l'espace de travail (A), dans laquelle la porte intérieure (15b) est conçue de préférence de façon à ce que celle-ci ne puisse être ouverte que dans la première configuration.

13. Installation embarquée (1) selon l'une des revendications précédentes, **caractérisée en ce que** la hauteur du placage (11) est essentiellement égale à la hauteur de l'installation embarquée (1).
